# EUROPÄISCHE PATENTSCHRIFT

(11) **EP 2 994 949 B1**
(45) Veröffentlichungstag und Bekanntmachung des Hinweises auf die Patenterteilung: **14.10.2020**
(21) Anmeldenummer: 14719013.6
(22) Anmeldetag: 24.04.2014
(51) Int. Cl.: H01M 2/34

(54) **BATTERIE MIT RÜCKSTELLBARER SICHERHEITSEINRICHTUNG SOWIE DAFÜR GEEIGNETER POLBOLZEN**
BATTERY WITH A SAFETY DEVICE WHICH CAN BE RESET, AND ALSO SUITABLE POLE STUD FOR SAID BATTERY
BATTERIE COMPRENANT UN DISPOSITIF DE SÉCURITÉ POUVANT ÊTRE RÉARMÉ AINSI QUE BOULONS DE BORNE APPROPRIÉS POUR LADITE BATTERIE

(30) Priorität: 08.05.2013 DE 102013208555
(43) Veröffentlichungstag der Anmeldung: 16.03.2016
(73) Patentinhaber: VW Kraftwerk GmbH, 38440 Wolfsburg (DE); VARTA Microbattery GmbH, 73479 Ellwangen Jagst (DE)
(72) Erfinder: GAUGLER, Andreas, 73479 Ellwangen (DE); HOLL, Konrad, 73434 Aalen (DE); STOCK, Stefan, 73492 Rainau (DE); SCHREIBER, Werner, 38527 Meine (DE)
(74) Vertreter: Patentanwaltskanzlei Cartagena
(86) Internationale Anmeldenummer: PCT/EP2014/058314
(87) Internationale Veröffentlichungsnummer: WO 2014/180665

(56) Entgegenhaltungen:
- EP-A1- 1 073 132
- JP-A- 2002 124 236
- JP-A- 2007 149 433
- US-A- 3 373 057
- US-A- 6 080 506

## Beschreibung

Die Erfindung betrifft eine Batterie mit einem Gehäuse, in dem mindestens eine Einzelzelle mit mindestens einer positiven und mindestens einer negativen Elektrode angeordnet ist. Durch das Gehäuse ist ein Polbolzen geführt, der mit der mindestens einen positiven Elektrode oder der mindestens einen negativen Elektrode elektrisch verbunden ist. Die Batterie weist einen pneumatisch betätigbaren elektrischen Schalter auf, der bei einem Druckanstieg innerhalb des Gehäuses über einen Schwellenwert hinaus seinen Schaltungszustand ändert und dabei die elektrische Verbindung zwischen mindestens einem der Polbolzen und der damit verbundenen mindestens einen Elektrode unterbricht. Gemäß einem zweiten Aspekt betrifft die Batterie einen Polbolzen, der für eine solche Batterie geeignet ist.

Der Begriff "Batterie" meinte ursprünglich mehrere in Serie geschaltete galvanische Zellen. Heute werden jedoch auch einzelne galvanische Zellen (Einzelzellen) häufig als Batterie bezeichnet. Bei der Entladung einer galvanischen Zelle findet eine energieliefernde chemische Reaktion statt, welche sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt zu einem der Elektrodenreaktion entsprechenden lonenstrom innerhalb der Zelle. Dieser lonenstrom wird durch einen Ionen leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Zellen werden vergleichsweise hohe Energiedichten insbesondere von Lithium-Ionen-Zellen erreicht, also von Zellen, bei denen bei Lade- und Entladeprozessen Lithium-Ionen von einer Elektrode zur anderen wandern. Derartige Zellen eignen sich besonders für den Einsatz in portablen Geräten wie Mobiltelefonen und Notebooks. Insbesondere sind sie aber auch als Energiequelle für Kraftfahrzeuge interessant.

In aller Regel weisen die Zellen von Lithium-Ionen-Batterien brennbare Bestandteile auf. So umfasst beispielsweise der Elektrolyt einer Lithium-Ionen-Zelle häufig als Hauptkomponente ein organisches Lösungsmittel wie z.B. Ethylencarbonat. In Verbindung mit der hohen Energiedichte solcher Zellen stellt dies ein nicht zu unterschätzendes Gefahrenpotenzial dar. Es müssen daher besondere Sicherheitsvorkehrungen getroffen werden, um Risiken für Verbraucher ausschließen zu können oder zumindest möglichst gering zu halten.

Lithium-Ionen-Zellen können insbesondere bei einer mechanischen Beschädigung oder durch Überladung in einen kritischen Zustand geraten, in dem unter Umständen Brandgefahr besteht. Die Überladung einer Lithium-Ionen-Zelle kann zur Abscheidung von metallischem Lithium auf der Oberfläche der negativen Elektrode führen sowie gegebenenfalls zu einer Zersetzung des in der Zelle enthaltenen Elektrolyten. Letzteres führt gegebenenfalls zu einer starken Aufgasung der Zelle. In Extremfällen kommt es dabei zu einer Schädigung eines die Zelle umgebenden Gehäuses. In der Folge können Feuchtigkeit und Sauerstoff in die Zelle eindringen, was in einer explosionsartigen Verbrennung resultieren kann.

Um dies zu vermeiden, ist es üblich, Lithium-Ionen-Zellen mit Sicherheitseinrichtungen zu versehen. Eine geeignete Schaltungsanordnung zur elektronischen Überwachung der Betriebssicherheit von wiederaufladbaren Lithium-Ionen-Zellen ist beispielsweise aus der DE 101 04 981 A1 bekannt. Die Verwendung von Schmelzsicherungen zur Erhöhung der Sicherheit von Lithium-lonen-Batterien ist aus der DE 10 2008 020 912 A1 bekannt. Und aus der DE 10 2007 020 905 A1 sind Zellen bekannt, die einen Ableiter aufweisen, der auf einer dünnen Kunststofffolie angeordnet ist und der eine Solltrennstelle aufweist. Verformt sich die Folie, beispielsweise in Folge einer Zellgasung, so wird der Ableiter an der Solltrennstelle zerstört, wodurch die Zelle irreversibel und dauerhaft deaktiviert wird.

Sowohl Schmelzsicherungen als auch Sicherungen, bei denen ein elektrischer Kontakt zerstört oder unterbrochen wird, sind als sehr zuverlässig bekannt. Problematisch ist allerdings, dass nach dem Auslösen solcher Sicherheitseinrichtungen die Batterie zunächst in einem kritischen, gegebenenfalls auch gefährlichen Zustand verbleibt. Mehr noch, da die genannten Sicherheitseinrichtungen irreversibel auslösen, ist es in der Regel nicht möglich, an diesem Zustand aktiv etwas zu ändern.

Aus der EP 1073132 A1 sind elektrochemische Sekundärzellen bekannt, die einen Teil einer implantierbaren medizinischen Vorrichtung darstellen, und dabei ein hermetisch dichtes Schutzgehäuse bilden. Ein Teil des Gehäuses kann dabei als Membran ausgebildet sein, wobei die Membran als Detektor für einen im Inneren des Gehäuses herrschenden Überdruck fungieren und ein Wölben der Membran einen Sicherheitsmechanismus auslösen kann. Hierbei wird ein Kurzschluss zwischen einer negativen und einer positiven Elektrode eingeleitet oder ein Nachladestromkreis wird kurzgeschlossen.

Aus der JP 2002-124236 A ist ein Sicherheitsmechanismus für Batterien unter Einsatz eines kolbenartig ausgebildeten Polbolzens bekannt. Entsteht in dem Gehäuse der beschriebenen Batterie ein Innendruck, so wird der Kolben, der in einer zylinderförmigen Aufnahme gelagert ist, nach oben gedrückt. Er steht dann nicht mehr in elektrischem Kontakt mit den Elektroden. Weiterhin kann dann ein Druckausgleich über einen eigens hierfür vorgesehenen Kanal erfolgen. Wird der Innendruck wieder kleiner, beispielsweise als Ergebnis des Druckausgleichs über den Kanal, sorgt eine Rückstellfeder dafür, dass der Polbolzen wieder nach unten gedrückt und der elektrische Kontakt mit den Elektroden wieder hergestellt wird. Potentiell nachteilhaft ist hier, dass die Abdichtung des Kolbens gegen die zylinderförmige Aufnahme schwierig zu bewerkstelligen ist. Ein Eindringen von Luft und Feuchtigkeit durch den Kanal für den Druckausgleich muss vermieden werden.

Aus der JP 2007-149433 A ist ein Sicherheitsmechanismus für eine Batterie unter Einsatz eines bistabilen außenliegenden Poldeckels bekannt. Im Normalbetrieb nimmt der Poldeckel eine erste stabile Konfiguration ein, bei der ein elektrischer Kontakt zu einer der Elektroden besteht. Entsteht in dem Gehäuse der beschriebenen Batterie ein Innendruck, so kann der Poldeckel in eine zweite stabile Konfiguration umklappen, in der der elektrische Kontakt zu der Elektrode unterbrochen ist. Dies ist allerdings nur möglich, wenn das Umklappen nicht mechanisch blockiert ist, beispielsweise weil der Poldeckel gegen einen Anschlusskontakt drückt.

Aus der US 6080506 A ist ein Sicherheitsmechanismus für eine Batterie unter Einsatz eines bistabilen innenliegenden Poldeckelteils bekannt. Hierbei kommt eine mehrteilige Baugruppe zum Einsatz, umfassend eine bistabile Membran, die bei einem Druck innerhalb des Batteriegehäuses nach außen umklappen kann. Auf der Außenseite der Membran ist ein Isolierelement innerhalb eines Hohlraums fixiert, den die Membran mit einem Außendeckel der mehrteiligen Baugruppe einschließt. Bei Normaldruck befindet sich das Isolierelement vollständig innerhalb des Hohlraums. Bei erhöhtem Innendruck in der Batterie kann es allerdings durch eine Öffnung in dem Außendeckel aus dem Hohlraum herausgeschoben werden, wenn nämlich die bistabile Membran nach außen umklappt. Durch das aus der Öffnung herausragende Isolierelement kann ein elektrischer Kontakt zu einem an der Außenseite des Außendeckels anliegenden Anschlusskontakt unterbrochen werden.

Der vorliegenden Erfindung lag die Aufgabe zugrunde, Batterien, insbesondere Lithium-Ionen-Batterien, bereitzustellen, in denen eine zuverlässige und einfache Sicherheitslösung realisiert ist, die den genannten Problemen Rechnung trägt.

Diese Aufgabe wird gelöst durch die Batterie mit den Merkmalen des Anspruchs 1. Bevorzugte Ausführungsformen der erfindungsgemäßen Batterie sind in den abhängigen Ansprüchen 2 bis 6 angegeben. Weiterhin trägt auch der Polbolzen gemäß Anspruch7zur Lösung der gestellten Aufgabe bei. Bevorzugte Ausführungsformen des erfindungsgemäßen Polbolzens sind in den abhängigen Ansprüchen 8 und 9 angegeben. Der Wortlaut sämtlicher Ansprüche wird hiermit durch Bezugnahme zum Inhalt der vorliegenden Beschreibung gemacht.

Wie die eingangs erwähnten gattungsgemäßen Batterien weist auch die erfindungsgemäße Batterie ein Gehäuse auf, in dem mindestens eine Einzelzelle mit mindestens einer positiven und mindestens einer negativen Elektrode angeordnet ist. Bei der Einzelzelle handelt es sich bevorzugt um eine Zelle auf Lithium-Ionen-Basis. Entsprechend ist die erfindungsgemäße Batterie bevorzugt eine Lithium-Ionen-Batterie. Anwendungsfelder für die erfindungsgemäße Batterie finden sich insbesondere im Bereich Kraftfahrzeuge. Die erfindungsgemäße Batterie ist entsprechend bevorzugt eine Kfz-Batterie.

Die Einzelzelle liegt bevorzugt in Form eines Verbundes aus Elektroden- und Separatorfolien mit der Sequenz positive Elektrode / Separator / negative Elektrode vor. Bevorzugt umfassen die Elektroden dabei metallische Stromkollektoren, die meist in Form von zwei- oder dreidimensionalen Flächengebilden vorliegen. Bei Lithium-Ionen-Batterien findet sich etwa auf der Seite der positiven Elektrode bevorzugt ein Netz oder eine Folie aus Aluminium, beispielsweise aus Aluminiumstreckmetall oder einer gelochten Aluminiumfolie. Auf der Seite der negativen Elektrode werden als Stromkollektoren meist Netze oder Folien aus Kupfer verwendet. Grundsätzlich kann die Batterie sowohl einen Zellenstapel (stack) aus mehreren flachen Einzelzellen enthalten, als auch eine gewickelte Einzelzelle (coil).

Das Gehäuse schirmt die mindestens eine Einzelzelle von ihrer Umgebung ab und ist bevorzugt gas- und flüssigkeitsdicht ausgebildet.

Fester Bestandteil einer erfindungsgemäßen Batterie sind in aller Regel ein positiver und ein negativer Polbolzen, die jeweils durch das Gehäuse der erfindungsgemäßen Batterie hindurch ins Gehäuseinnere ragen. In diesem Fall weist eine erfindungsgemäße Batterie sowohl einen positiven als auch einen negativen Polbolzen auf. Es ist allerdings auch möglich, dass das Gehäuse selbst als positiver oder negativer Pol dient. Zu diesem Zweck muss es elektrisch leitfähig ausgebildet sein. Bevorzugt besteht es aber ohnehin aus Metall, insbesondere aus Aluminium oder aus einer Aluminiumlegierung. In diesem Fall kann eine erfindungsgemäße Batterie auch nur einen positiven Polbolzen oder nur einen negativen Polbolzen aufweisen.

Der positive Polbolzen, insbesondere der innerhalb des Gehäuses angeordnete Teil des positiven Polbolzens, ist gegebenenfalls mit der mindestens einen positiven Elektrode elektrisch verbunden. Der negative Polbolzen, insbesondere der innerhalb des Gehäuses angeordnete Teil des positiven Polbolzens, ist gegebenenfalls mit der mindestens einen negativen Elektrode verbunden. In der Regel sind die Polbolzen durch eine isolierfähige Masse vom Gehäuse elektrisch und mechanisch getrennt, wie das beispielsweise in der DE 100 47 206 A1 beschrieben ist. Sind beide Pole derart isoliert, so ist das Gehäuse selbst potenzialfrei.

Bevorzugte Ausführungsformen der Polbolzen werden im Weiteren noch detailliert beschrieben. Vorab sei jedoch schon erwähnt, dass es besonders bevorzugt ist, dass die Polbolzen oder mindestens einer der Polbolzen auf ihrer Außenseite ein Gewinde tragen. Derartig ausgebildete Polbolzen können durch eine Bohrung oder einen alternativen Durchlass durch eine Wand des Gehäuses der erfindungsgemäßen Batterie geführt und beispielsweise mittels einer Mutter, die auf das Gewinde aufgeschraubt wird, in der Bohrung oder in dem Durchlass fixiert werden.

Die erfindungsgemäße Batterie umfasst mindestens einen pneumatisch betätigbaren elektrischen Schalter, der bei einem Druckanstieg innerhalb des Gehäuses ausgehend von einem Ausgangswert über einen Schwellenwert hinaus seinen Schaltungszustand ändert und dabei die elektrische Verbindung zwischen mindestens einem der Polbolzen und der damit verbundenen mindestens Elektrode unterbricht. Bei der vorliegenden Erfindung macht man sich also die beispielsweise bei einer Überladung auftretende Gasung einer Zelle zunutze. Die entstehenden Gase dienen als "Arbeitsmedium" und können auf den pneumatisch betätigbaren elektrischen Schalter Druck ausüben, bis die erwähnte Änderung des Schaltungszustands erfolgt. Konkrete Ausführungen zur Ausgestaltung des pneumatisch betätigbaren elektrischen Schalters folgen.

Besonders zeichnet sich die erfindungsgemäße Batterie dadurch aus, dass sie eine Rückstelleinrichtung umfasst, mit der sich eine in Folge einer Änderung des Schaltungszustands unterbrochene elektrische Verbindung wieder herstellen lässt, ohne dass es dazu einer Öffnung des Gehäuses bedarf.

Mit anderen Worten, der erwähnte pneumatisch betätigbare elektrische Schalter weist einen ersten Schaltungszustand auf, in dem eine elektrische Verbindung zwischen einem der Polbolzen und der damit verbundenen mindestens einen Elektrode besteht sowie einen zweiten Schaltungszustand, in dem diese elektrische Verbindung unterbrochen ist. Die Rückstelleinrichtung muss derart ausgebildet und/oder angeordnet sein, dass sie den Schalter ohne die erwähnte Gehäuseöffnung vom zweiten in den ersten Schaltungszustand, in dem die unterbrochene elektrische Verbindung wieder hergestellt ist, rücküberführen kann. Nach dieser Maßnahme ist es beispielsweise möglich, eine nach dem Auslösen des pneumatisch betätigbaren elektrischen Schalters sich in einem kritischen Zustand befindliche Batterie kontrolliert zu entladen.

Der mindestens eine pneumatisch betätigbare elektrische Schalter umfasst bevorzugt zwei elektrische Kontaktelemente, die räumlich voneinander getrennt sind. Bevorzugt ist eines der Kontaktelemente mit der mindestens einen positiven Elektrode oder der mindestens einen negativen Elektrode verbunden, das andere mit dem jeweils von der Polung her korrespondierenden Polbolzen. In besonders bevorzugten Ausführungsformen kann zumindest eines der Kontaktelemente auch ein Teil des Polbolzens oder der Polbolzen selbst sein. Weiterhin umfasst der Schalter eine gasundurchlässige Membran als elektrisch leitfähiges Verbindungselement, das in einem ersten Zustand (der dem erwähnten ersten Schaltungszustand entspricht) die beiden Kontaktelemente verbindet und das durch den Druckanstieg in einen zweiten Zustand (entsprechend dem erwähnten zweiten Schaltungszustand) überführbar ist, in dem der Kontakt zu mindestens einem der Kontaktelemente unterbrochen ist.

Bevorzugt handelt es sich bei dem Verbindungselement um ein sogenanntes bistabiles Verbindungselement. Hierunter ist ein Verbindungselement zu verstehen, das zwei mögliche stabile Zustände (hier den ersten und den zweiten Zustand) einnehmen kann. Ein Umschalten von dem ersten Zustand in den zweiten ist nur bedingt durch einen ersten äußeren Impuls, beispielsweise den erwähnten Druckanstieg innerhalb des Gehäuses, möglich. Nach dem Umschalten verbleibt das Verbindungselement in dem zweiten Zustand, auch wenn der erste Impuls nicht mehr auf das Verbindungselement wirkt. Eine Rücküberführung in den ersten Zustand erfolgt nur, wenn das Verbindungselement einem zweiten äußeren Impuls ausgesetzt ist, der sich vom ersten unterscheidet, beispielsweise einem Druckabfall unter den Ausgangswert.

Besonders bevorzugt handelt es sich bei dem Verbindungselement um eine bistabile gasundurchlässige Membran. Wird eine Seite einer derartigen Membran mit Druck beaufschlagt, so wölbt sich die Membran in Richtung der nicht mit Druck beaufschlagten Seite. Die dabei stattfindende Umformung kann bei entsprechender Anordnung der erwähnten elektrischen Kontaktelemente zu der Unterbrechung der elektrischen Verbindung zwischen diesen führen.

Im Falle einer bistabilen Membran wird diese bedingt durch den Druck aus einem ersten stabilen Zustand, beispielsweise einer konvexen (oder konkaven) Anordnung, in einen zweiten stabilen Zustand, beispielsweise eine konkave (oder konvexe) Anordnung, überführt, in welchem sie auch verbleibt, wenn die Druckbeaufschlagung aussetzt und sich der Ausgangsdruck wieder einstellt.

Der positive und/oder der negative Polbolzen weist einen Hohlraum auf, der partiell von dem Verbindungselement begrenzt wird. Das Verbindungselement ist also Bestandteil des Polbolzens. Insbesondere, wenn gleichzeitig - wie oben erwähnt - eines der Kontaktelemente auch ein Teil des Polbolzens oder der Polbolzen selbst ist, kann davon gesprochen werden, dass der pneumatisch betätigbare elektrische Schalter zumindest teilweise in den Polbolzen integriert ist. Oder mit anderen Worten, der Polbolzen beinhaltet zumindest teilweise (abgesehen von dem zweiten Kontaktelement) den pneumatisch betätigbaren elektrischen Schalter.

Besonders bevorzugt ist der Hohlraum in dem innerhalb des Gehäuses angeordneten Teil des Polbolzens angeordnet, so dass das Verbindungselement den Hohlraum gegen das Innere des Gehäuses der erfindungsgemäßen Batterie begrenzt.

Die Membran, insbesondere die bistabile Membran, wölbt sich in dem oben definierten ersten Zustand (bzw. dem erwähnten ersten Schaltungszustand) bevorzugt konvex in den Innenraum hinein und geht beim durch den Druckanstieg innerhalb des Gehäuses bedingten Übergang in den oben definierten zweiten Zustand (bzw. den erwähnten zweiten Schaltungszustand) in eine konkave Konfiguration über. Damit es hierbei zu der beabsichtigten Unterbrechung der elektrischen Verbindung zwischen dem mindestens einen Polbolzen und der damit verbundenen mindestens einen Elektrode kommt, ist eines der erwähnten Kontaktelemente bevorzugt derart angeordnet, dass es mit der Membran nur dann in Kontakt steht, wenn sich diese in dem ersten Zustand (konvex) befindet.

Der Polbolzen kann Teil der Rückstelleinrichtung sein. Hierzu weist er eine Durchgangsbohrung auf, die den Hohlraum und die erwähnte Membran mit der Gehäuseaußenseite verbindet. Die Bohrung dient dem Zweck, das Verbindungselement, nämlich die Membran, aus dem erwähnten zweiten Zustand in den erwähnten ersten Zustand zu überführen.

Bei der Rückstelleinrichtung handelt es sich bevorzugt entweder um eine fluidbetriebene (also eine pneumatische oder hydraulische) oder eine mechanische Rückstelleinrichtung. Im ersten Fall ist die Bohrung und/oder der Hohlraum mit einer Flüssigkeit oder einem Gas als Arbeitsmedium befüllt. Die Rücküberführung in den ersten Zustand wird durch Druckbeaufschlagung des Arbeitsmediums, die ohne weiteres von der Gehäuseaußenseite aus erfolgen kann, bewerkstelligt. Im zweiten Fall ist es bevorzugt, dass die Rückstelleinrichtung einen in der Bohrung gelagerten Stift umfasst, mittels dem das Verbindungselement aus dem zweiten in den ersten Zustand überführbar ist. So lässt sich durch einen solchen Stift beispielsweise die beschriebene bistabile Membran aus einer in Folge eines Druckanstiegs eingenommenen konkaven Konfiguration in die ursprüngliche konvexe drücken.

Besonders bevorzugt ist ein Ende des Stifts an dem Verbindungselement, insbesondere an der Membran fixiert.

Besonders bevorzugt umfasst die erfindungsgemäße Batterie ein Anzeigemittel, welches die in Folge einer Änderung des Schaltungszustands unterbrochene elektrische Verbindung anzeigt. In einer besonders bevorzugten Ausführungsform dient als Anzeigemittel der erwähnte Stift. Beispielsweise kann dieser eine farbig markierte Spitze aufweisen, die in Folge der Druckerhöhung im Inneren der Batterie aus der Bohrung herausgedrückt wird.

Der erfindungsgemäße Polbolzen, der Bestandteil der beschriebenen Batterie ist, kann auch separat vertrieben werden. Er lässt sich in die folgenden Abschnitte unterteilen:
- einen Kopf mit zwei gegenüberliegenden Flachseiten, wobei der Kopf bevorzugt scheiben- oder plattenförmig ausgebildet ist und/oder die Flachseiten bevorzugt parallel zueinander angeordnet sind und
- einen aus einer der Flachseiten austretenden Schaft mit einem freien Schaftende, wobei der Schaft bevorzugt zylinderförmig ausgebildet ist und/oder senkrecht aus der Flachseite austritt.

Kopf und Schaft bilden also gemeinsam den Grundkörper des Polbolzens. Bevorzugt sind sie aus Metall, insbesondere aus Stahl, gefertigt, wobei als Grundmaterialien natürlich auch andere leitfähige Metalle in Frage kommen.

Bevorzugt sind der Kopf und der Schaft aus einem Stück gefertigt, sind also Bestandteile ein und desselben Teils. Oder anders ausgedrückt, bevorzugt ist der Grundkörper einteilig ausgebildet und der Kopf und der Schaft bilden Teilbereiche des Grundkörpers.

Gekennzeichnet ist der Polbolzen durch den Hohlraum innerhalb des Kopfes, die gasundurchlässige Membran, die den Hohlraum begrenzt sowie die Durchgangsbohrung durch den Schaft, die, bevorzugt ausgehend von dem freien Schaftende, in den Hohlraum mündet. Hierbei ist bevorzugt, dass die Membran den Hohlraum auf der dem Schaft abgewandten Flachseite begrenzt. Weiterhin ist bevorzugt, dass die Durchgangsbohrung den Schaft axial durchläuft.

Der Hohlraum ist bevorzugt ausschließlich über die Durchgangsbohrung zugänglich und ansonsten gasdicht abgeschlossen.

Wie oben erläutert, kann eine bistabile Membran als Verbindungselement eines pneumatisch betätigbaren elektrischen Schalters dienen, wobei einer der stabilen Zustände einer ersten Schaltstellung entspricht und der andere einer zweiten. Der Polbolzen mit der bistabilen gasundurchlässigen Membran kann entsprechend Teil eines solchen Schalters sein. Der Grundkörper aus Kopf und Schaft dient in diesem Fall als eines der beiden bereits erwähnten elektrischen Kontaktelemente des Schalters.

In bevorzugten Ausführungsformen kann der erfindungsgemäße Polbolzen auch das zweite der erwähnten elektrischen Kontaktelemente des Schalters umfassen. Der Polbolzen kann in diesen Ausführungsformen selbst als pneumatisch betätigbarer elektrischer Schalter fungieren. Oder mit anderen Worten, Gegenstand der Erfindung ist auch ein pneumatisch betätigbarer elektrischer Schalter in Form eines Polbolzens. Hierzu kann der Polbolzen beispielsweise eine Kappe aufweisen, die über den Kopf des Polbolzens gestülpt ist und die das zweite erwähnte elektrische Kontaktelement bildet oder in die das zweite Kontaktelement integriert ist. Besonders bevorzugt ist die Kappe becher- oder napfförmig ausgebildet und besteht aus einem elektrisch nicht leitfähigen Material, wobei sie einen Boden aufweist, in den das zweite Kontaktelement integriert ist.

Bevorzugt umfasst der Polbolzen einen in der Bohrung gelagerten Stift, der unmittelbar auf der Membran aufsitzt. In Übereinstimmung mit den obigen Ausführungen kann dieser Stift als Rückstellmittel dienen, um die Membran aus einer in Folge eines Druckanstiegs eingenommenen konkaven Konfiguration in die ursprüngliche konvexe drücken.

In weiteren bevorzugten Ausführungsformen umfasst der Polbolzen ein Gewinde auf der Außenseite des Schaftes.

Wenn der Polbolzen Bestandteil einer oben beschriebenen Batterie ist, insbesondere wenn er durch eine Bohrung oder einen alternativen Durchlass durch eine Wand des Gehäuses der erfindungsgemäßen Batterie geführt ist, wie das oben erwähnt ist, so ist der Kopf bevorzugt innerhalb des Gehäuses angeordnet während zumindest ein Teil des Schaftes, insbesondere der mit dem Gewinde versehene Teil des Schaftes, außerhalb des Gehäuses angeordnet ist. Auf das Gewinde kann, was ebenfalls bereits erwähnt wurde, eine Mutter aufgeschraubt werden, um den Polbolzen zu fixieren.

Weitere Merkmale der Erfindung sowie aus der Erfindung resultierende Vorteile ergeben sich aus der nachfolgenden Beschreibung der Zeichnungen, anhand derer die Erfindung illustriert wird. Es sei an dieser Stelle betont, dass sämtliche in der vorliegenden Anmeldung beschriebenen fakultativen Aspekte des erfindungsgemäßen Verfahrens zum einen für sich allein, zum anderen aber auch in Kombination mit einem oder mehreren weiteren Merkmalen bei einer Ausführungsform der Erfindung verwirklicht sein können. Die nachfolgend beschriebenen bevorzugten Ausführungsformen dienen lediglich zur Erläuterung und zum besseren Verständnis der Erfindung und sind in keiner Weise einschränkend zu verstehen.

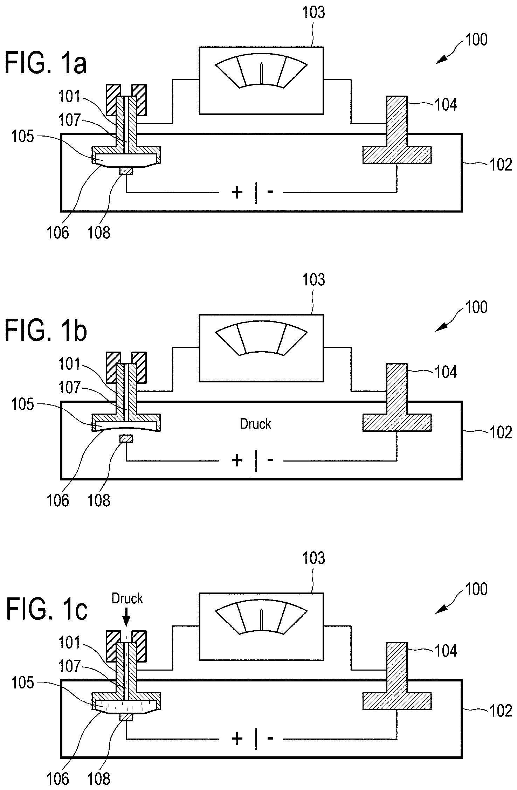

In **Fig. 1** ist schematisch das Auslösen des pneumatisch betätigbaren elektrischen Schalters einer bevorzugten Ausführungsform einer erfindungsgemäßen Batterie **100** sowie dessen Rückstellung mittels einer Rückstelleinrichtung dargestellt. **Fig. 1a** stellt die Situation vor einem Druckanstieg dar. Der positive Polbolzen **101** ist durch das Gehäuse **102** geführt und über das Potentiometer **103** elektrisch mit dem negativen Polbolzen **104** verbunden. Zwischen den beiden Polbolzen fließt ein Strom. Gut zu erkennen ist der innerhalb des Polbolzens **101** angeordnete Hohlraum **105,** der zum Inneren des Gehäuses **102** hin durch die metallische, gasundurchlässige Membran **106** begrenzt wird. Der Hohlraum **105** steht durch die Bohrung **107** mit der Außenseite des Gehäuses **102** in Verbindung. Die Membran **106** liegt an dem elektrischen Kontakt **108** an, der mit der positiven Elektrode einer innerhalb des Gehäuses **102** angeordneten Lithium-Ionen-Zelle gekoppelt ist.

**Fig.** 1b stellt die Situation nach einem Druckanstieg innerhalb des Gehäuses **102** dar. Bedingt durch den Druckanstieg hat sich die Membran **106** in den Hohlraum hineingewölbt. Der elektrische Kontakt zu der positiven Elektrode innerhalb des Gehäuses ist unterbrochen. Entsprechend liegt auch die vom Potentiometer angezeigte Spannung bei 0.

Wird in einem nächsten Schritt **(****Fig. 1c****)** ein sich im Hohlraum **105** und in der Bohrung **107** befindliches Arbeitsmedium, beispielsweise Luft, von außen mit Druck beaufschlagt, so lässt sich die Membran **106** wieder aus dem Hohlraum **105** drücken, bis sie wieder an dem Kontakt **108** anliegt. Es ist entsprechend in der Folge möglich, die dargestellte Batterie **100** kontrolliert zu entladen.

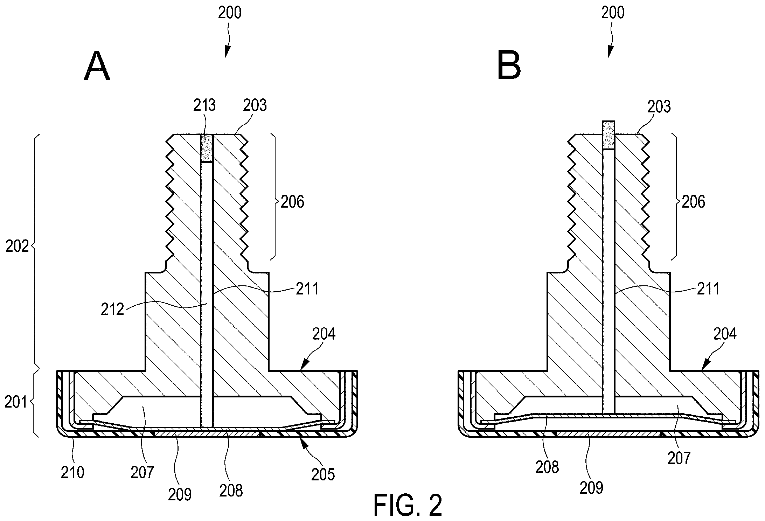

In **Fig. 2** ist eine Ausführungsform eines gemäß der Erfindung bevorzugten stählernen Polbolzens **200** dargestellt. Dieser lässt sich in einen scheibenförmigen Kopf **201** sowie einen Schaft **202** mit einem freien Schaftende **203** unterteilen. Der Kopf **201** weist zwei sich gegenüberliegenden Flachseiten, die Oberseite **204** und die Unterseite **205,** auf. Der Schaft **202** tritt senkrecht aus dem Zentrum der Flachseite **204** aus und ist bevorzugt zylindrisch ausgebildet. Gegebenenfalls kann er sich zu seinem freien Ende **203** hin auch konisch zuspitzen. In einen Teilabschnitt des Schaftes ist bei Bedarf das Gewinde **206** eingefräst. Bestimmungsgemäß verwendet wird der Schaft **202** von innen nach außen durch eine dafür bestimmte Durchbrechung eines Batteriegehäuses geführt und auf dessen Außenseite gegebenenfalls mit einer passenden Mutter gekontert.

Innerhalb des Kopfes **201** findet sich ein gleichfalls scheibenförmiger Hohlraum **207,** der auf der dem Schaft **202** abgewandten Flachseite **205** nach außen hin von einer metallischen, gasundurchlässigen Membran **208** begrenzt ist. Letztere steht auf der einen Seite in unmittelbarem Kontakt mit dem metallischen Kontaktelement **209,** das in den Boden der ansonsten elektrisch nicht leitfähigen, becher- oder napfförmigen Kappe **210** integriert ist, die über den Kopf **201** gestülpt ist und diesen, abgesehen von der Flachseite **204,** im Wesentlichen vollständig abdeckt. Auf der anderen Seite ist die Membran **204** elektrisch mit dem Grundkörper des Polbolzens **200** gekoppelt. Bei einem Druckanstieg auf der dem Hohlraum **207** abgewandten Seite der Membran **204** kann sich die Membran **204** in den Hohlraum **207** hineinwölben. Dadurch kommt es zu einer Dekontaktierung der Membran **204** und des Kontaktelements **208.**

Innerhalb des Schaftes **202** befindet sich eine axiale Bohrung **211,** welche an dem freien Ende **203** des Schaftes **202** in diesen eintritt und in den Hohlraum **207** mündet. In der axialen Bohrung **210** ist ein Stift **212** gelagert, dessen eines Ende bis in den Hohlraum **207** ragt und dort unmittelbar auf der Membran **204** aufsitzt. Das andere Ende trägt eine farbige Markierung **213.** Wölbt sich die Membran **204** in den Hohlraum **207** hinein, so wird das farbige Ende **213 des** Stiftes **212** aus der Bohrung **211** herausgedrückt und zeigt an, dass der im Polbolzen **200** integrierte pneumatisch betätigbare Schalter ausgelöst hat. Drückt man den Stift **212** wieder in die Bohrung **211** hinein, so wird die Membran **204** aus dem Hohlraum **207** wieder herausgedrückt, so dass wieder ein direkter Kontakt mit dem Kontaktelement **208** besteht.

## Patentansprüche

1. Batterie mit
• einem Gehäuse,
• mindestens einer Einzelzelle mit mindestens einer positiven und mindestens einer negativen Elektrode, die in dem Gehäuse angeordnet ist,
• einem durch das Gehäuse geführten positiven Polbolzen, der mit der mindestens einen positiven Elektrode elektrisch verbunden ist und/oder einem durch das Gehäuse geführten negativen Polbolzen, der mit der mindestens einen negativen Elektrode elektrisch verbunden ist, und
• mindestens einem pneumatisch betätigbaren elektrischen Schalter, der bei einem Druckanstieg innerhalb des Gehäuses über einen Schwellenwert hinaus seinen Schaltungszustand ändert und dabei die elektrische Verbindung zwischen mindestens einem der Polbolzen und der damit verbundenen mindestens einen Elektrode unterbricht, und
• einer Rückstelleinrichtung, mit der sich eine in Folge einer Änderung des Schaltungszustands unterbrochene elektrische Verbindung wieder herstellen lässt, ohne dass es dazu einer Öffnung des Gehäuses bedarf,
**dadurch gekennzeichnet, dass** der positive und/oder der negative Polbolzen
• einen Kopf mit zwei gegenüberliegenden Flachseiten,
• einen aus einer der Flachseiten austretenden Schaft mit einem freien Schaftende,
• einen Hohlraum innerhalb der Kopfes,
• eine gasundurchlässige Membran, die den Hohlraum begrenzt, und
• eine Durchgangsbohrung durch den Schaft, die in den Hohlraum mündet und den Hohlraum und die Membran mit der Gehäuseaußenseite verbindet,
umfasst.

2. Batterie nach Anspruch 1, **dadurch gekennzeichnet, dass** der mindestens eine Schalter zwei räumlich voneinander getrennte elektrische Kontakteelemente umfasst, wobei die gasundurchlässige Membran in einem ersten Zustand die beiden Kontakteelemente verbindet und durch den Druckanstieg in einen zweiten Zustand überführbar ist, in dem der Kontakt zu mindestens einem der Kontakteelemente unterbrochen ist.

3. Batterie nach einem der vorhergehenden Ansprüche, **dadurch gekennzeichnet, dass** es sich bei der Rückstelleinrichtung um eine fluidbetriebene oder eine mechanische Rückstelleinrichtung handelt.

4. Batterie nach Anspruch 3, **dadurch gekennzeichnet, dass** die Rückstelleinrichtung einen in der Bohrung gelagerten Stift umfasst, mittels dem das Verbindungselement aus dem zweiten in den ersten Zustand überführbar ist.

5. Batterie nach einem der vorhergehenden Ansprüche, **dadurch gekennzeichnet, dass** sie ein Anzeigemittel umfasst, welches die in Folge einer Änderung des Schaltungszustands unterbrochene elektrische Verbindung anzeigt.

6. Batterie nach Anspruch 5, **dadurch gekennzeichnet, dass** der Stift, mit dem das Verbindungselement über die Bohrung aus dem zweiten in den ersten Zustand überführbar ist, als Anzeigemittel fungiert oder ein Anzeigemittel steuert.

7. Polbolzen für eine Batterie, insbesondere eine Batterie nach einem der vorhergehenden Ansprüche, umfassend
• einen Kopf mit zwei gegenüberliegenden Flachseiten und
• einen aus einer der Flachseiten austretenden Schaft mit einem freien Schaftende,
**gekennzeichnet durch** einen Hohlraum innerhalb des Kopfes, eine gasundurchlässige Membran, die den Hohlraum begrenzt sowie eine Durchgangsbohrung durch den Schaft, die in den Hohlraum mündet.

8. Polbolzen nach Anspruch 7, **gekennzeichnet durch** einen in der Bohrung gelagerten Stift, der unmittelbar auf der Membran aufsitzt.

9. Polbolzen nach Anspruch 7 oder Anspruch 8, **gekennzeichnet durch** ein Gewinde auf der Außenseite des Schaftes.

## Claims

1. Battery having
• a housing,
• at least one individual cell with at least one positive electrode and at least one negative electrode, which individual cell is arranged in the housing,
• a positive pole stud which is passed through the housing and is electrically connected to the at least one positive electrode and/or a negative pole stud which is passed through the housing and is electrically connected to the at least one negative electrode, and
• at least one electrical switch which can be pneumatically operated and changes its switching state in the event of an increase in pressure within the housing beyond a threshold value and, in the process, interrupts the electrical connection between at least one of the pole studs and the associated at least one electrode,
• a resetting device with which an electrical connection which is interrupted as a result of a change in the switching state can be re-established, without the housing having to be opened for this purpose,
**characterized in that** the positive pole stud and/or the negative pole stud comprise/comprises
• a head with two opposite flat sides,
• a shaft which extends out of one of the flat sides and has a free shaft end,
• a hollow space within the head,
• a gas-impermeable diaphragm which delimits the hollow space, and
• a passage bore through the shaft, which passage bore issues into the hollow space and connects the hollow space and the diaphragm to the outside of the housing.

2. Battery according to Claim 1, **characterized in that** the at least one switch comprises two electrical contact elements which are physically separated from one another, wherein the gas-impermeable diaphragm, in a first state, connects the two contact elements and, owing to the increase in pressure, can be moved to a second state in which the contact to at least one of the contact elements is interrupted.

3. Battery according to either of the preceding claims, **characterized in** the resetting device is a fluid-operated or a mechanical resetting device.

4. Battery according to Claim 3, **characterized in that** the resetting device comprises a pin which is mounted in the bore and by means of which the connecting element can be moved from the second state to the first state.

5. Battery according to one of the preceding claims, **characterized in that** it comprises an indicator means which indicates the electrical connection which is interrupted as a result of a change in the switching state.

6. Battery according to Claim 5, **characterized in that** the pin with which the connecting element can be moved from the second state to the first state via the bore functions as an indicator means or controls an indicator means.

7. Pole stud for a battery, in particular a battery according to one of the preceding claims, comprising
• a head with two opposite flat sides and
• a shaft which extends out of one of the flat sides and has a free shaft end,
**characterized by** a hollow space within the head, a gas-impermeable diaphragm which delimits the hollow space, and a passage bore through the shaft, which passage bore issues into the hollow space.

8. Pole stud according to Claim 7, **characterized by** a pin which is mounted in the bore and sits directly on the diaphragm.

9. Pole stud according to Claim 7 or Claim 8, **characterized by** a thread on the outside of the shaft.

## Revendications

1. Batterie, comprenant
* un boîtier,
* au moins une cellule individuelle comprenant au moins une électrode positive et au moins une négative, qui est disposée dans le boîtier,
* un boulon de borne positif passé à travers le boîtier, lequel est relié électriquement à l'au moins une électrode positive et/ou un boulon de borne négatif passé à travers le boîtier, lequel est relié électriquement à l'au moins une électrode négative, et
* au moins un commutateur électrique pouvant être actionné pneumatiquement, qui modifie son état de commutation dans le cas d'une augmentation de la pression à l'intérieur du boîtier au-dessus d'une valeur de seuil et interrompt ainsi la liaison électrique entre au moins l'un des boulons de borne et l'au moins une électrode reliée à celui-ci, et
* un dispositif de rappel, qui permet de rétablir une liaison électrique interrompue en conséquence d'une modification de l'état de commutation sans qu'une ouverture du boîtier soit nécessaire à cet effet,
**caractérisée en ce que** le boulon de borne positif et/ou négatif comporte
* une tête ayant deux côtés plats opposés,
* une tige sortant de l'un des côtés plats et comprenant une extrémité de tige,
* un espace creux à l'intérieur de la tête,
* une membrane hermétique aux gaz qui délimite l'espace creux, et
* un trou de traversée à travers la tige, qui débouche dans l'espace creux et relie l'espace creux et la membrane au côté extérieur du boîtier.

2. Batterie selon la revendication 1, **caractérisée en ce que** l'au moins un commutateur comporte deux éléments de contact électriques séparés l'un de l'autre dans l'espace, la membrane hermétique aux gaz, dans un premier état, reliant les deux éléments de contact et pouvant, par l'augmentation de pression, être transférée dans un deuxième état dans lequel le contact avec au moins l'un des éléments de contact est interrompu.

3. Batterie selon l'une des revendications précédentes, **caractérisée en ce que** le dispositif de rappel est un dispositif de rappel actionné par fluide ou mécanique.

4. Batterie selon la revendication 3, **caractérisée en ce que** le dispositif de rappel comporte une broche logée dans le trou, au moyen de laquelle l'élément de liaison peut être transféré du deuxième dans le premier état.

5. Batterie selon l'une des revendications précédentes, **caractérisée en ce qu'**elle comporte un moyen indicateur qui indique la liaison électrique interrompue en conséquence d'une modification de l'état de commutation.

6. Batterie selon la revendication 5, **caractérisée en ce que** la broche avec laquelle l'élément de liaison peut être transféré du deuxième dans le premier état fait office de moyen indicateur ou commande un moyen indicateur.

7. Boulon de borne pour une batterie, notamment une batterie selon l'une des revendications précédentes, comprenant
* une tête ayant deux côtés plats opposés,
* une tige sortant de l'un des côtés plats et comprenant une extrémité de tige,
**caractérisé par** un espace creux à l'intérieur de la tête, une membrane hermétique aux gaz qui délimite l'espace creux, ainsi qu'un trou de traversée à travers la tige, qui débouche dans l'espace creux.

8. Boulon de borne selon la revendication 7, **caractérisé par** une broche logée dans le trou, qui repose directement sur la membrane.

9. Boulon de borne selon la revendication 7 ou la revendication 8, **caractérisé par** un filet sur le côté extérieur de la tige.
